# EUROPEAN PATENT SPECIFICATION

(11) **EP 0 702 173 B1**
(45) Date of publication and mention of the grant of the patent: **25.04.2001**
(21) Application number: 95305058.0
(22) Date of filing: 20.07.1995
(51) Int. Cl.: F16J 3/04

(54) **Protective bellows**
Faltenbalg
Soufflet d'étanchéité

(30) Priority: 16.09.1994 GB 9418764
(43) Date of publication of application: 20.03.1996
(73) Proprietor: DRAFTEX INDUSTRIES LIMITED, Edinburgh EH2 3AP, Scotland (GB)
(72) Inventor: Breheret, Joel, 44119 Treillieres (FR)
(74) Representative: Foster, David Martyn

(56) References cited:
- EP-A- 0 299 850
- DE-U- 8 807 327
- GB-A- 1 583 673

## Description

The invention relates to a protective bellows made of flexible material extending between two axially spaced ends, in which the material at one axial end defines a circumferentially extending collar facing outwardly of the bellows, the circumferentially extending collar comprising an axially inward portion extending continuously and uninterruptedly around the circumference of the collar and an integral axially more outward portion which has circumferentially distributed interruptions in its axially outward-positioned peripheral edge.

Such a protective bellows is known, for example, from GB-A-1 583 673. In this known bellows, the interruptions in the axially outward peripheral edge are in the form of channels to facilitate the egress of excess grease within the bellows. However, the invention is concerned with the difficulty of assembling the circumferentially extending collar, onto a rigid circumferential mounting surface (for example, of a mechanism to be protected by the bellows). This end of the bellows will normally be arranged to be a tight fit on the mounting surface and it will therefore have to be circumferentially stretched in order to fit over the mounting surface. Such stretching is difficult and may be more so if thermoplastic material is used for the bellows.

According to the invention, therefore, the protective bellows as first set forth above is characterised in that the circumferentially distributed interruptions form a plurality of peripherally arranged teeth positioned between the interruptions and which each have an axial length substantially half the total axial length of the base of the collar and which extend substantially parallel to the axis of the bellows and away from the said axial end to facilitate temporary circumferential stretching of the material of the collar when the bellows is fitted onto a mounting surface.

A protective bellows embodying the invention will now be described, by way of example only, with reference to the accompanying drawings in which:
Figure 1 shows a partial side elevation of the external casing of a universal joint and also showing one of the protective bellows embodying the invention positioned ready to fit onto the casing, the bellows being shown in half cross-section;
Figure 2 corresponds to Figure 1, but shows the bellows in the course of being fitted onto the casing; and
Figure 3 is a perspective view of part of the bellows of Figures 1 and 2.

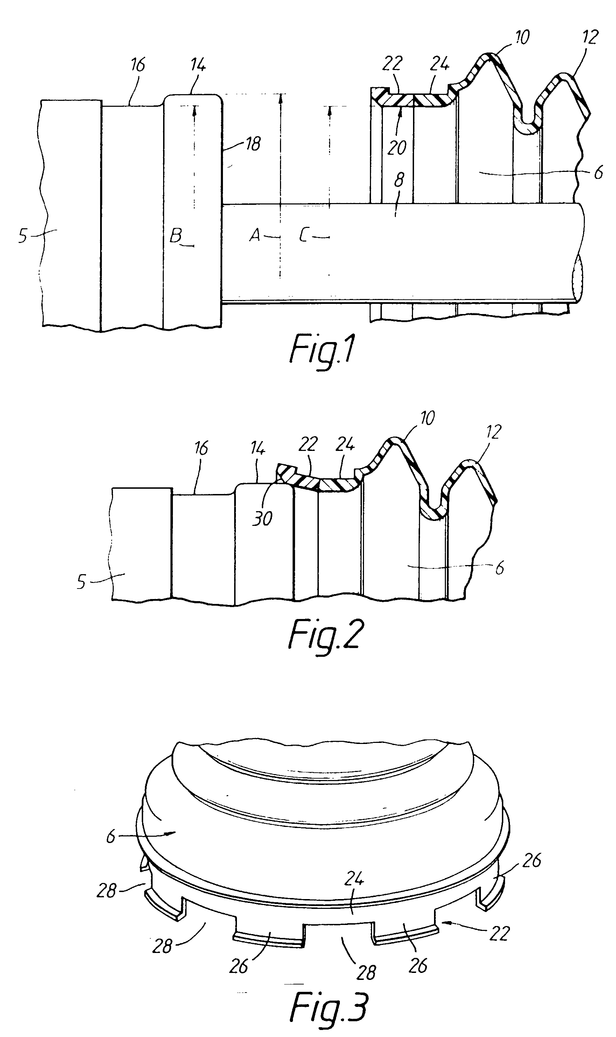

As shown in Figure 1, the casing 5 of a universal joint forming part of the transmission of a motor vehicle is to be protected by means of the protective bellows 6. For this purpose, it is necessary for the bellows 6 to be fitted over the end of the casing 5 so as to close off the interior mechanism of the universal joint and to protect the drive shaft 8 extending out of the casing 5.

The protective bellows 6 is made of thermoplastic material. As shown, it comprises a number of bellows turns of which two are shown at 10 and 12, the bellows turns being of progressively reducing diameter. The small diameter end of the bellows (not shown) is clamped to the external surface of the shaft 8.

The casing 5 has fixing zones 14 and 16 adjacent its end face 18. The diameter A of the first zone 14 is greater than the diameter B of the second zone 15, the difference in diameter being between about 1 and 5 millimetres usually.

The second zone 16 has a length, measured axially with respect to the casing 5, which is suited to receive a fixing collar 20 of the protective bellows 6. When the bellows 6 is fitted in position over the end of the casing 5, the fixing collar 20 is seated in the zone 16, and thereafter an encircling fixing clamp may be used to hold the bellows in position. When the bellows is fixed in this position, the zone 14 of the casing, with its increased diameter, helps to locate the bellows axially.

In order to ensure good sealing between the bellows 6 and the casing 5, it is necessary for the interior diameter C of the collar 20 to be slightly less than the diameter B of zone 16. The material of the bellows 6 must therefore be stretched during the fitting operation.

In order to facilitate this process, and in accordance with a feature of the invention, the fixing collar 20 is divided into two axially arranged zones 22 and 24. The axially endmost zone 22 comprises a series of circumferentially alternating teeth 26 and gaps 28 (see Figure 3). Advantageously, there are at least two teeth and two gaps, although preferably there are more than this number, as shown in Figure 3.

The presence of the teeth and gaps facilitates the mounting process, as shown in Figure 2. The increased flexibility of the teeth 26 enables the zone 22 to be bent radially outward as shown in Figure 2, during the process of fitting the bellows onto the casing 5, and the teeth also centralise the bellows during the fitting process. The fitting process is assisted by a chamfer 30 on the leading face of the teeth 26. As the fitting process continues, the teeth guide the second zone 24 of the fixing collar 20 onto the zone 14 of the casing 5, helping it to stretch as necessary. This process continues until the fixing collar 20 seats in the zone 16 of the casing 5. Effective sealing between the bellows 6 and the casing 5 is guaranteed by the second zone 24 of the bellows which is of course circumferentially continuous as shown in Figure 3.

The additional flexibility given to the end of the bellows 6 by the presence of the teeth 26 and gaps 28 greatly facilitate the stretching of the bellows which is necessary in order to fit it on the casing 5. The teeth 26 and 28 thus avoid the risk that this stretching process will tear the material of the bellows. This risk is present when the fixing collar 20 is of the usual construction, that is, without the teeth 26 and gap 28.

The circumferential length of each gap 28 can be the same as, greater than, or less than the corresponding length of each tooth 26. As indicated in Figure 1, the axial length of the zone 24 is substantially the same as that of the zone 22, but they need not be of the same length.

The bellows is advantageously produced mainly by extrusion-blow-moulding. However, the teeth 26 would be produced by mechanical cutting, for example. Instead, injection-blow-moulding can be used.

## Claims

1. A protective bellows made of flexible material extending between two axially spaced ends, in which the material at one axial end (20) defines a circumferentially extending collar (20) facing outwardly of the bellows, the circumferentially extending collar (20) comprising an axially inward portion (24) extending continuously and uninterruptedly around the circumference of the collar (20) and an integral axially more outward portion (22) which has circumferentially distributed interruptions (28) in its axially outward-positioned peripheral edge, characterised in that the circumferentially distributed interruptions (28) form a plurality of peripherally arranged teeth (26) positioned between the interruptions (28) and which each have an axial length substantially half the total axial length of the base of the collar (20) and which extend substantially parallel to the axis of the bellows and away from the said axial end (20) to facilitate temporary circumferential stretching of the material of the collar (20) when the bellows is fitted onto a mounting surface (14).

2. A bellows according to claim 1, characterised in that the material is thermoplastic material.

3. A bellows according to claim 1 or 2, characterised in that the collar (20) is in the form of a circumferentially extending groove facing outwardly of the bellows.

4. A bellows according to any preceding claim, characterised in that there are at least two teeth (26).

5. A bellows according to any preceding claim, characterised in that the axially leading edges of the teeth (26) are chamfered (30).

## Patentansprüche

1. Schutzbalg aus einem flexiblen Material, der sich zwischen zwei axial voneinander beabstandeten Enden erstreckt, wobei das Material an einem axialen Ende (20) einen sich um den Umfang erstreckenden, von dem Balg nach außen weisenden Kragen (20) definiert, der einen axial innen liegenden Teil (24), der sich durchgehend und ununterbrochen um den Umfang des Kragens (20) erstreckt, und einen integralen, axial weiter außen liegenden Teil (22) mit um den Umfang verteilten Unterbrechungen (28) in seinem axial nach außen positionierten Umfangsrand aufweist, dadurch gekennzeichnet, daß die um den Umfang verteilten Unterbrechungen (28) mehrere um den Umfang angeordnete Zähne (26) bilden, die zwischen den Unterbrechungen (28) angeordnet sind, deren axiale Länge im wesentlichen die Hälfte der axialen Gesamtlänge der Basis des Kragens (20) beträgt und die sich im wesentlichen parallel zur Achse des Balgs und von dem axialen Ende (20) weg erstrecken, um ein vorübergehendes umfangsmäßiges Dehnen des Materials des Kragens (20) zu erleichtern, wenn der Balg an einer Montagefläche (14) angebracht wird.

2. Balg nach Anspruch 1, dadurch gekennzeichnet, daß es sich bei dem Material um ein thermoplastisches Material handelt.

3. Balg nach Anspruch 1 oder 2, dadurch gekennzeichnet, daß der Kragen (20) in Form einer sich um den Umfang erstreckenden Nut, die vom Balg nach außen weist, vorliegt.

4. Balg nach einem der vorhergehenden Ansprüche, dadurch gekennzeichnet, daß mindestens zwei Zähne (26) vorhanden sind.

5. Balg nach einem der vorhergehenden Ansprüche, dadurch gekennzeichnet, daß die axial vorne liegenden Ränder der Zähne (26) abgeschrägt (30) sind.

## Revendications

1. Soufflet de protection fabriqué en matériau flexible s'étendant entre deux extrémités espacées axialement, dans lequel le matériau à une extrémité axiale (20) définit une collerette (20) s'étendant circonférentiellement, tournée vers l'extérieur du soufflet, la collerette (20) s'étendant circonférentiellement comprenant une portion axialement interne (24) s'étendant en continu et de façon ininterrompue sur toute la circonférence de la collerette (20) et une portion intégrée axialement plus externe (22) qui possède des interruptions (28) réparties sur la circonférence dans son bord périphérique positionné axialement vers l'extérieur, caractérisé en ce que les interruptions (28) réparties sur la circonférence forment une pluralité de dents (26) arrangées sur la périphérie, positionnées entre les interruptions (28) et qui ont chacune une longueur axiale valant substantiellement la moitié de la longueur axiale totale de la base de la collerette (20) et qui s'étendent substantiellement parallèlement à l'axe du soufflet et à l'écart de ladite extrémité axiale (20) pour faciliter l'étirement circonférentiel temporaire du matériau de la collerette (20) lorsque le soufflet est ajusté sur une surface de montage (14).

2. Soufflet selon la revendication 1, caractérisé en ce que le matériau est un matériau thermoplastique.

3. Soufflet selon la revendication 1 ou 2, caractérisé en ce que la collerette (20) a la forme d'une rainure s'étendant circonférentiellement, tournée vers l'extérieur du soufflet.

4. Soufflet selon l'une quelconque des revendications précédentes, caractérisé en ce qu'il y a au moins deux dents (26).

5. Soufflet selon l'une quelconque des revendications précédentes, caractérisé en ce que les bords axialement en avant des dents (26) sont biseautés (30).
